# EUROPEAN PATENT APPLICATION

(11) **EP 1 464 516 A2**
(43) Date of publication of application: **06.10.2004**
(21) Application number: 04008067.3
(22) Date of filing: 02.04.2004
(51) Int. Cl.: B44C 5/04

(54) **Tile having a non-directional visual appearance**

(30) Priority: 03.04.2003 US 406486
(71) Applicant: Armstrong World Industries, Inc., Lancaster Pennsylvania 17603 (US)
(72) Inventor: Schultz, Jeffrey R., Willow Street, PA 17584 (US); Wright, Ralph W., Jr., Lancaster, PA 17603 (US); Wallick, Bennett E., Strasburg, PA 17579 (US); Gemperline, Laura Ann, Lancaster, PA 17603 (US); Kauffman, William J., Manheim, PA 17545 (US)
(74) Representative: Finck, Dieter, Dr.Ing.

(57) **Abstract**

A non-directional tile (1) is obtained by surface applying and consolidating a relatively thin, non-porous, multi-colored, resin particulate (3) decorative layer (2) onto a backing layer (4). The non-directionality is the result of the proper selection of resin particle size distribution and the use of contrasting colors. The result is a tile that an ordinary observer cannot discern the machine direction and a tile floor having seams that are indiscernible by an ordinary observer.

## Description

### FIELD OF THE INVENTION

The present invention is related to decorative coverings and in greater detail to decorative tiles having an improved non-directional visual appearance capable of use in a flooring system.

### BACKGROUND

Decorative surface coverings may be formed by adhering tile to a surface, such as a subfloor. Tiles are typically formed by first forming a continuous sheet of material and then cutting the sheet material into individual tile pieces. Normally, the tiles are square in shape.

While tile, typically residential tile, can be made by rotogravure printing of the design pattern, commercial tile is normally made by consolidating multi-colored particulate or chips. Unless the consolidated tiles are formed individually in a flat bed press, each tile has a machine direction, which is parallel to the direction of travel of the sheet or tile through the manufacturing equipment.

The multi-colored particulate or chips, which are formed into the tile, tend to smear and elongate in the machine direction. This is true to some extent even for tile made with a double-belt press. Unless the tile are carefully laid up on the subfloor with each tile oriented with the machine direction parallel to the machine direction of all the other pieces of tile, the directionality of the tile and the seams between the tile are readily apparent. Frequently, even when the tile is laid up with the machine direction parallel, the seams are apparent because the pattern is not continuous across the seam. This can result when, for example, a darker colored chip is cut in forming the tile edge and the cut chip is laid adjacent a lighter colored region of the adjacent tile.

Sometimes advantage is taken of this feature by installing each tile piece oriented 90 from the adjacent tile to form a visual checkerboard pattern. Whether the tile is installed with adjacent tile having the machine direction parallel or rotated 90°, installation time is increased.

Thus, what is needed is a multi-colored particulate or chip tile that has an improved non-directional appearance, which allows the tile to be laid up without concern regarding the machine direction and in which the seams are less apparent. What is meant by "non-directional" is that an ordinary person or observer, not one of ordinary skill in the art, would not be able to determine the machine direction under casual inspection. Such tile can be laid up without regard to machine direction.

The eye and mind expect to see a continuous pattern across a floor or other surface. If the tiles are laid up with the machine direction parallel, even with tile having directionality, the eye may be able to convince the mind that the pattern is continuous and that there is no seam. However, if there is directionality and tile is laid up with the machine directions at 90°, the eye will detect the difference in the pattern indicating to the mind that there is a seam.

If the tile is non-directional, the seams may be indiscernible, i.e. essentially invisible to the unaided eye, even with the machine direction of adjacent tiles being 90° from each other, when viewed from a location approximately 1.5 m (5 feet) above the level of the surface covering and within 1.5 m (5 feet) horizontally from the observer with a light source positioned at a 45° angle from the plane of the surface covering and behind the observer. Of course the seam may be apparent to the eye even if the tile is non-directional. This can result when, for example, a number of darker colored chips are cut in forming the tile edge and the cut chips are laid adjacent a lighter colored region of the adjacent tile revealing a straight line of color difference.

While it is necessary for the tile to be non-directional for the seam to be indiscernible, it is advantageous to have a non-directional multi-colored particulate decorative layer even if a print design or other feature is added above the decorative layer that makes the seams between tiles visible. The multi-colored particulate background design of such a tile is crisper and sharper, and therefore more appealing.

### SUMMARY OF THE INVENTION

It has been discovered that with the proper selection of particles, multi-colored particulate tile can be formed using ordinary calendaring equipment or roll press or roll mill equipment to yield a non-directional visual. In one embodiment, the non-directional tile can be installed so that the seams between the tiles are indiscernible to the ordinary observer without regard to the machine direction of the tiles. The critical feature is the size of the particles, however the proper selection of color and quantity of the various colored particles are contributing factors to the non-directionality. The non-directionality is obtained, at least in part, by minimizing the consolidation of the resin particles forming the decorative layer.

The present invention generally incorporates a decorative layer having at least three pluralities of differently colored resin particles. The size distribution of each plurality has a size distribution in which less than 20% by weight of the particles is retained on a No. 20 U.S. alternate mesh sieve. The resin particles are consolidated to form a non-porous decorate layer.

In one embodiment, the resin particles are thermoplastic, such as polyvinyl chloride or polyolefin, which are typically used in making floor tile. In fact, in some embodiments, the decorative layer does not include any binders other than thermoplastic binders.

The present invention does not require hard particles to yield a non-directional appearance. Therefore, in one embodiment the non-directional tile can be made with resin particles having hardness of less than a Shore D hardness of 80 or a Mohs hardness of 2.0.

The decorative layer is adhered to a backing layer, which may be non-porous. It is believed that it is the combination of the particle size and relatively thin thickness of the decorative layer that yields the non-directionality. That is, by limiting the particle size and the thickness of the decorative layer, the processing equipment does not smear or elongate the particles significantly, i.e. any smearing or elongation is not observable to the unaided eye.

In another embodiment, the decorative layer includes chips, which may be mono-colored chips, jaspe chips, or a combination of mono-colored chips and jaspe chips. The mono-colored chips and jaspe chips may include a pearlescent pigment or a metallic pigment. The chips may be any shape, but should have a thickness no greater than the thickness of the decorative layer. The shape of the chips may include generally circular or a strip with a length at least three times its width.

The chips have a major surface that forms part of the decorative layer surface. The major surface is substantially flat in one embodiment.

In one embodiment the chips have a length or major dimension at least twice the thickness of the decorative layer. In a second embodiment, the length or major dimension is at least four times the thickness of the decorative layer. The thickness of the chips is at least one half the thickness of the decorative layer in one embodiment.

In one embodiment, the chips form at least 5% of the surface area of the decorative layer. The surface area of the decorative layer may comprise less than 50% chips. In another embodiment, the chips form from 10% to 30% of the decorative layer surface area. In still another embodiment the chips form from 15% to 25% of the decorative layer surface area. In yet another embodiment the chips form from 15% to 35% of the decorative layer surface area.

A further embodiment includes a discontinuous printed pattern overlying the decorative layer. The pattern may be formed by a pigmented plastisol. The plastisol may be transfer printed onto the decorative layer.

The decorative layer may be formed from three, four, five or more different colored particles. In one embodiment, the percent, by weight, of the different colored particles is 20 to 80% of a first color, 10 to 35% of second color, 5 to 35% of a third color and 5 to 35% of a fourth color. In a second embodiment the there are, by weight, 25 to 60% of a first color, 10 to 30% of a second color, 5 to 30% of a third color and 5 to 30% of a fourth color. In a third embodiment, there are, by weight, 25 to 50% of a first color, 15 to 25% of a second color, 10 to 25% of a third color and 5 to 15% of a fourth color. In a fourth and fifth embodiment, 5 to 15%, by weight, of a fifth color is added to the second and third embodiments.

In one embodiment, the base colors, which are the two colors with the largest amount of particles, are from the same color family, such as red, blue or yellow, but have different hues and different "L" values. "L" value refers to the lightness/darkness of a color in the L, a, b color system of the Commission Internationale de L'Eclairage.
One of the other colored particles may be from the same color family as the base particles, but have a different hue and an "L" value between the "L" values of the base particles.

The invention also includes a decorative tile having a backing layer and an adjacent decorative layer. The decorative layer has at least three pluralities of differently colored resin particles. The size distribution of each plurality is such that less than 5% by weight of each plurality is retained on a No. 20 U.S. alternate mesh sieve, at least 70% by weight of each plurality is retained on a No. 40 U.S. alternate mesh sieve, and at least 95% by weight of each plurality is retained on a No. 80 U.S. alternate mesh sieve. The differently colored resin particles are consolidated to form a non-porous decorative layer.

Another invention is the method of installing the decorative tile with the seams being indiscernible to an ordinary observer when viewed from a location approximately 1.5 m (5 feet) above the level of the tile and within 1.5 m (5 feet) horizontally from the observer with a light source positioned at a 45° angle from the plane of the tile and behind the observer, whether or not the machine direction of the tiles are aligned parallel.

The invention further includes the method of making the decorative tile.

### BRIEF DESCRIPTION OF THE DRAWINGS

FIG. 1 is a schematic cross-section of one embodiment of the invention.
FIG. 2 is a schematic cross-section of a second embodiment of the invention.

### DETAILED DESCRIPTION OF THE INVENTION

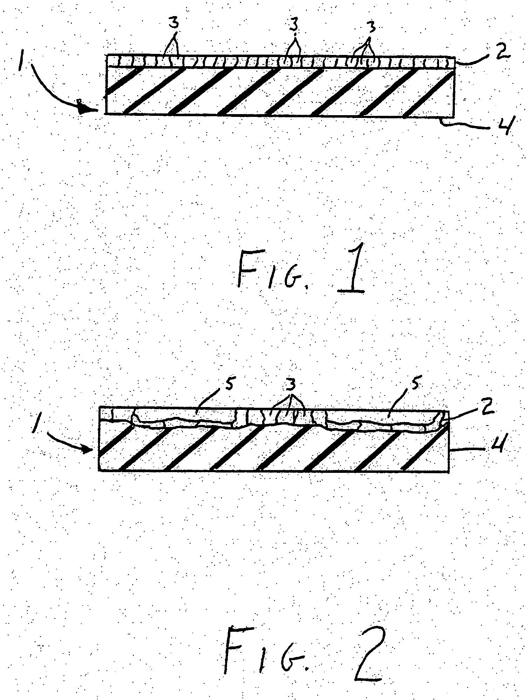

The present invention, in one embodiment shown in Figure 1, comprises a decorative tile 1 and decorative surface covering including a plurality of the tiles. The tiles have a crisp, sharp, surface applied decorative layer 2 of consolidated resin particles 3 and a backing layer 4. There are at least three differently colored pluralities of resin particles forming the decorative layer. The tiles can be laid up on a subfloor using an adhesive by conventional means, or adhesive can be preapplied to the tile.

The particles and backing layer are formed from resin compositions including a resin binder and filler. While other resins may be used, polyvinyl chloride resins perform well. The fillers can be any conventional fillers. The backing layer may include recycled material.

The non-directionality of the decorative layer is not dependent on the hardness of the resin particles. In fact, the material forming resin particles may be the same as that typically used in making multi-colored particulate tile of the prior art that has directionality. Specifically, the resin particles may have a hardness of less than a Shore D hardness of 80 or a Mohs hardness of 2.0.

The surface applied decorative layer is non-porous, meaning that there are substantially no openings in the layer that allow one to see through the layer. However, the decorative layer may include transparent or translucent resin particles. While the base color or colors may be transparent or translucent, typically the transparent or translucent resin particles would form one of the accent colors.

The backing layer is made by conventional methods and may include the use of recycled resin material. In one embodiment, the backing layer is non-porous.

The use of filler material reduces the cost of the layer and increases strength, while imparting some stiffness. The percent filler by weight of both the resin particles and the backing layer may be at least 70%. A filler level of at least 75% yields a slightly stiffer layer, and a filler level of at least 80% yields a more cost effective tile that is not too stiff.

The physical properties of the decorative tile can vary in hardness and flexibility within the above filler levels. One standard measurement of hardness is an indentation test that indicates the resistance of the product to indentation. One class of products that fall within this range of filler level is Vinyl Composition Tile. The indentation properties of this class of product are described in ASTM F 1066, which is incorporated by reference. However, depending upon the binder chosen and any addition of plasticizer, the hardness as measured by this method can fall outside the range described in ASTM F 1066.

In one embodiment, the thickness of the finished tile is about 2.5 mm (100 mils) to about 3.8 mm (150 mils). In a second embodiment, the thickness of the finished tile is about 2.9 mm (115 mils) to about 3.5 mm (135 mils). Regardless of the finished tile thickness, the thickness of the decorative layer is less than the thickness of the backing layer, for the reasons discussed below.

The thickness of the decorative layer is more critical than the thickness of the overall tile. As the decorative layer becomes thicker, it is more difficult to deter smearing and elongation of the resin particles. Therefore, it is desirable for the thickness of the decorative layer to be no more than 1.5 mm (60 mils). In one embodiment the thickness is no more than 1 mm (40 mils) and in another embodiment no more than 0.64 mm (25 mils). Since in most embodiments, the majority of the unconsolidated resin particles forming the decorative layer are between about 0.84 mm (33 mils) and about 0.4 mm (16 mils) in nominal diameter, a decorative layer thickness of between about 0.38 mm (15 mils) and about 0.51 mm (20 mils) requires a majority of the resin particles to be consolidated no more than one half their original size and yields a good visual appearance. In another embodiment, the decorative layer has a thickness of at least 0.38 mm (15 mils).

In one embodiment, a majority of the resin particles, by weight, pass through a No. 30 U.S. alternate mesh sieve. Therefore, a majority of the resin particles have a major dimension of less than about 0.58 mm (23 mils). Since the decorative layer in the final product is typically between about 0.38 mm (15 mils) and about 0.51 mm (20 mils), a majority of the resin particles are consolidated no more than one half their original size. Even when a substantial number of the resin particles are retained on a No. 30 U.S. alternate mesh sieve and less than five percent, by weight, are retained on a No. 20 U.S. alternate mesh sieve, a majority of the resin particles are subjected to a consolidation of less than two-fold.

The decorative layer must have a minimum thickness. Since the decorative layer is the wear layer and ASTM F 1066 requires at least a 0.54 mm (10 mil) thick wear layer, the decorative layer should be at least 0.54 mm (10 mil) thick.

The tiles are non-directional, meaning an ordinary person, not one of ordinary skill in the art, would not be able to determine the machine direction under casual inspection. This results because the particles are not appreciably smeared or elongated during consolidation, meaning that any elongation is not observable to the unaided eye from a distance of 1.5 m (5 feet). Such tiles can be laid up without regard to machine direction. In one embodiment, the seam between the tiles is indiscernible, i.e. essentially invisible to the eye when viewed from a location approximately 1.5 m (5 feet) above the level of the tiles and within 1.5 m (5 feet) horizontally from the observer with a light source positioned at a 45° angle from the plane of the tiles and behind the observer.

One key requirement to obtain the non-directionality is the size of the resin particles that are consolidated to form the decorative layer. If the particles are too large, they tend to smear and elongate producing a visually noticeable machine direction. If the particles are too small, the visual appearance tends to blend and lose its desired multi-colored particulate appearance. Therefore, the less than 20% by weight of the resin particles should be retained on a No. 20 U.S. alternate mesh sieve.

A No. 20 U.S. alternate mesh sieve is made with a wire having a nominal diameter of 0.501 mm (20.1 mils) and with a sieve opening of 0.841 mm (33.1 mils). Since the particles are not spherical, particles having a major dimension of greater than 0.841 mm (33.1 mils) may pass through the No. 20 U.S. alternate mesh sieve. For the purposes of this disclosure, what is meant by "retained on a No. 'X' U.S. alternate mesh sieve" means the total amount of particles retained on the No. 'X' U.S. alternate mesh sieve and any coarser (lower numbered) sieve. Therefore, 20% by weight of the resin particles retained on a No. 20 U.S. alternate mesh sieve means that 5% may have been retained on a No. 14 U.S. alternate mesh sieve and 15% retained on a No. 20 U.S. alternate mesh sieve.

A No. 10 U.S. alternate mesh sieve is made with a wire having a nominal diameter of 0.900 mm (35.4 mils) and with a sieve opening of 2.00 mm (78.7 mils). A No. 30 U.S. alternate mesh sieve is made with a wire having a nominal diameter of 0.390 mm (15.4 mils) and with a sieve opening of 0.595 mm (23.4 mils). A No. 40 U.S. alternate mesh sieve is made with a wire having a nominal diameter of 0.290 mm (11.4 mils) and with a sieve opening of 0.420 mm (16.5 mils). A No. 50 U.S. alternate mesh sieve is made with a wire having a nominal diameter of 0.215 mm (8.5 mils) and with a sieve opening of 0.297 mm (11.7 mils). A No. 60 U.S. alternate mesh sieve is made with a wire having a nominal diameter of 0.180 mm (7.1 mils) and with a sieve opening of 0.250 mm (9.8 mils). A No. 80 U.S. alternate mesh sieve is made with a wire having a nominal diameter of 0.131 mm (5.2 mils) and with a sieve opening of 0.177 mm (7.0 mils). A No. 140 U.S. alternate mesh sieve is made with a wire having a nominal diameter of 0.076 mm (3.0 mils) and with a sieve opening of 0.105 mm (4.1 mils).

Since fewer larger particles results in less smearing and more non-directionality, some embodiments have less than 10% by weight of the particles retained on a No. 20 U.S. alternate mesh sieve. Other embodiments have less than 5% by weight of the particles retained on a No. 20 U.S. alternate mesh sieve. Still other embodiments have less than 2% by weight of the particles retained on a No. 20 U.S. alternate mesh sieve.

To yield a desired visual appearance, the particles need to be of at least a minimum size. Therefore, in some embodiments at least 90% of the particles are retained on a No. 50 U.S. alternate mesh sieve. In other embodiments at least 95% of the particles are retained on a No. 50 U.S. alternate mesh sieve. In still other embodiments at least 98% of the particles are retained on a No. 50 U.S. alternate mesh sieve.

Further, another desirable visual is obtained if some of the particles are somewhat larger. Therefore, in some embodiments at least 70% of the particles are retained on a No. 40 U.S. alternate mesh sieve. In other embodiments at least 80% of the particles are retained on a No. 40 U.S. alternate mesh sieve. In still other embodiments at least 85% of the particles are retained on a No. 40 U.S. alternate mesh sieve.

In one embodiment, the size distribution of the resin particle is such that less than 5% by weight of each plurality of differently colored resin particles is retained on a No. 20 U.S. alternate mesh sieve, at least 70% by weight of each plurality of differently colored resin particles is retained on a No. 40 U.S. alternate mesh sieve, at least 95% by weight of each plurality of differently colored resin particles is retained on a No. 80 U.S. alternate mesh sieve.

A non-directional multi-colored particulate design yields a unique and pleasing appearance when used as the base for a discontinuous design layer. The discontinuous design layer is applied to the non-directional multi-colored particulate decorative layer, so that the decorative layer shows through the design layer. The discontinuous design can be either literally discontinuous or it can be a continuous transparent sheet or film with areas of opacity or translucency. The opacity or translucency can be obtained by printing or distributing particulate, such as chips 5, shown in Figure 2.

Any inks known to those of ordinary skill in the art, including pigmented plastisol, can be used. Any application method known to those of ordinary skill in the art, including transfer printing, can be used. Depending on the printed pattern, the discontinuous design may add or detract from the ability to hide the seams.

The chips may be any shape, provided the thickness is no greater than the nominal thickness of the decorative layer and the length or major dimension is at least two times the thickness of the decorative layer. Typically, the thickness of the chips is at least one half the thickness of the decorative layer. In some embodiments, the major dimension of the chips is at least four times greater than the thickness of the decorative layer. In fact, the chips can be rectangular or stringy in shape, as well as triangular, circular, curlicue or random shaped. The chips may be mono-colored, jaspe or pearlescent. Further, more than one type of chip may be used in combination.

In most embodiments, the major surface of the chips, which is perpendicular to the thickness, is substantially flat. Generally, a major surface of the chips forms part of the exposed surface of the decorative layer.

For the chips to yield more than a minimal visual effect, they should cover at least 5% of the surface area of the tile. Unless one desires the chips to dominate the visual appearance, the chips should cover no more than 50% of the surface area of the tiles. In one embodiment with a desirable appearance, the chips cover between 10% and 30% of the surface area of the tile. In another embodiment with a desirable appearance, the chips cover between 15% and 25% of the surface area of the tile.

Non-directionality can be improved by the proper selection of particle color. The color of the particles should be selected to be aesthetically pleasing, but the number of colors, quantity of each color, and the contrast between the hue and "L" values can make the design "busy" to the eye and improve non-directionality. There must be at least three differently colored particles. Some embodiments have at least four differently colored particles and some embodiments have at least five differently colored particles.

The particles are differently colored if any of the hue, chroma and "L" value (lightness/darkness) is different. For the purposes of this application, a color family means one of red, blue, or yellow. Red includes reddish green to reddish purple; yellow includes yellowish orange to yellowish green; and blue includes bluish purple to bluish green.

It is desirable from an aesthetics viewpoint to have two base colors, which each have a larger amount of particles than the accent colors. While not required, the base colors are desirably from the same color family, but have a different hue and a different "L" value from each other. A pleasing visual is obtained if one of the accent colors is selected from the same color family, but has a different hue and an "L" value between the "L" values of the base colors. If there is one or more additional accent colors, it is desirable for them to be selected from the a different color family, with a different hue and a different "L" value, either greater or less than the "L" value of the base colors. If there are three accent colors, it is desirable for the fourth color to have an "L" value greater than the "L" value of the base colors and the fifth color to have an "L" value less than the "L" value of the base colors.

Since the seams between the tiles tend to be dark, colors with an "L" value of less than 30 may tend to hide the seams or make them less discernible. Therefore, it may be desirable to have at least one plurality with an "L" value of less than 30.

In one embodiment, the distribution of the colored particles is, by weight, 20 to 80% of a first plurality of resin particles having a first color, 10 to 35% of a second plurality of resin particles having a second color, 5 to 35% of a third plurality of resin particles having a third color and 5 to 35% of a fourth plurality of resin particles having a fourth color. In a second embodiment, the distribution of the colored particles is, by weight, 25 to 60% of a first plurality of resin particles having a first color, 10 to 30% of a second plurality of resin particles having a second color, 5 to 30% of a third plurality of resin particles having a third color and 5 to 30% of a fourth plurality of resin particles having a fourth color. In a third embodiment, the distribution of the colored particles is, by weight, 25 to 50% of a first plurality of resin particles having a first color, 15 to 25% of a second plurality of resin particles having a second color, 10 to 25% of a third plurality of resin particles having a third color and 5 to 15% of a fourth plurality of resin particles having a fourth color. In any of the previously described embodiments, a fifth color may be present in the amount of 5 to 20% by weight.

The invention also includes the method of installing decorative tiles having a multicolored particulate design by adhering them to a substrate with the machine direction of the adjacent tiles parallel, perpendicular or randomly oriented. The non-directionality of the design is such that the seam between a first tile and the second tile is indiscernible to an ordinary observer when viewed from a location approximately 1.5 m (5 feet) above the level of the tiles and within 1.5 m (5 feet) horizontally of the observer with a light source positioned at a 45° angle from the plane of the tiles and behind the observer.

A further invention is the method of making a decorative tile by forming at least three pluralities of resin particles, each plurality being different in color from the other pluralities and having a size distribution such that less than 20% by weight of each plurality is retained on a No. 20 U.S. alternate mesh sieve, mixing the pluralities of resin particles together, applying the mixture of pluralities of resin particles to the surface of a backing layer to form a layer of resin particles on the backing layer, consolidating the layer of resin particles to form a non-porous multicolored particulate patterned decorative layer adhered to the backing layer, and cutting the consolidated layer into tiles. The resin particles can be consolidated by calendaring, with a roll press, with a roll mill, or on a double belt press.

The resin particles may be made by mixing a resin composition comprising resin and filler in a continuous mixer, sheeting the mixture, grinding the sheeted mixture to form ground particles and sieving the ground particles to size the ground particles and form a plurality of resin particles. The sheeted mixture may be crushed to form breaker chips before the breaker chips are ground. The breaker chips may be ground in a cagemill grinder and the ground particles sized in a siever using a No. 20 U.S. alternate mesh sieve and a No. 40 U.S. alternate mesh sieve.

### EXAMPLES

### Resin Particle Preparation:

| Formulation | |
|---|---|
| Vinyl homopolymer resin | 49.6 kg (109.3 lbs.) |
| Vinyl acetate/vinyl chloride copolymer resin | 48.9 kg (107.7 lbs.) |
| Phthalate plasticizer | 40.2 kg (88.7 lbs.) |
| Stabilizer | 2.27 kg (5.0 lbs.) |
| Limestone filler | 758.1 kg (1671.3 lbs.) |
| Pigment | variable (dependent upon color desired) |

### Process

All ingredients were weighed and blended at ambient temperature. Then the blend was charged into a Farrel continuous mixer. The mixture was heated and fused inside the mixer and discharged at about 176.7°C (350 °F). The mixture was then dropped into a 2-roll mill with a front roll temperature of about 60°C (140 °F) and a back roll temperature of about 127°C (260 °F). The mixture was then sheeted out to a thickness of about 2 mm (80 mils). The sheet was run through a water bath where it was cooled. The cooled sheet was run through a crusher that breaks the sheet into roughly 1-inch pieces (breaker chips).

The breaker chips were taken to an off-line grinding operation that consisted of a cagemill grinder and siever. The breaker chips were ground inside the cagemill at ambient temperature and passed into the siever where they were sieved to a -20/+40 size using a No. 20 U.S. alternative mesh screen and a No. 40 U.S. alternative mesh screen. The result was solid colored resin particles.

The process was repeated to make additional solid colored resin particles of different colors. Five different colored resin particles or mottles were taken to a blender where they were blended to a ratio of about 45%, about 22%, about 11 %, about 11 % and about 11%. A blend ratio of about 28%, about 22%, about 22%, about 14% and about 14% has also been done and with the right choice of colors, yields a richer visual with more depth.

### Sieve Analysis of Resin Particles

The following sieve analysis of the resin particles was obtained. The weight percent of resin particles retained on the sieve is indicated.

**Table 1**

| **Sieve Size (mesh)** | **Mottle #** | | | | |
|---|---|---|---|---|---|
| | 1 | 2 | 3 | 4 | 5 |
| **20** | 0.5 | 0.8 | 0.7 | 1.0 | 0.5 |
| **30** | 38.3 | 46.5 | 47.2 | 37.1 | 42.4 |
| **40** | 43.7 | 40.4 | 38.6 | 44.7 | 43.7 |
| **80** | 17.0 | 11.8 | 13.0 | 16.4 | 12.3 |
| **140** | 0.1 | 0.1 | 0.2 | 0.2 | 0.3 |
| **pan** | 0.4 | 0.4 | 0.3 | 0.6 | 0.8 |

Four additional pluralities of resin particles were also made as described above, two using No. 20 and No. 40 U.S. alternative mesh screens (samples 6 and 7), and two using No. 20 and No. 50 U.S. alternative mesh screens (samples 8 and 9). The sieve analysis follows, with the weight percent of the resin particles retained on the screen.

**Table 2**

| Sieve Size (mesh) | 6 | 7 | 8 | 9 |
|---|---|---|---|---|
| 20 | 1 | 2 | 1.5 | 1 |
| 30 | 55 | 57 | 46 | 46 |
| 40 | 33 | 31 | 26 | 26 |
| 50 | 9 | 7 | 18 | 17 |
| 60 | 1 | 1 | 6 | 7 |
| Pan | 1 | 2 | 2.5 | 3 |

### Composite Tile Preparation

| Formulation of backing (base) layer | |
|---|---|
| Limestone filler | 358.4 kg (790.1 lbs.) |
| Homopolymer PVC resin | 31.1 kg (68.6 lbs.) |
| Vinyl acetate, Vinyl chloride copolymer | 31.1 kg (68.5 lbs.) |
| Phthalate Plasticizer | 21.4 kg (47.2 lbs.) |
| Stabilizer | 1.2 kg (2.7 lbs.) |
| Pigment | color and amounts variable depending upon desired base color |

### Process

The ingredients for the tile backing were weighed and charged into an F-Type mixer. The ingredients were mixed and heated until fused and discharged at about 138°C (280°F). The fused mixture was dropped into a 2-roll mill with front roll temperature of about 87.8°C (190°F) and a back roll temperature of about 115.6°C (240°F). A blanket was made that was about 3.2 mm (125 mils) thick. About 0.125 grams/sq cm (116 grams/sq ft) of the blended resin particles were fed onto the blanket using a knurled roll feeder. The structure was vibrated to settle (even out) the resin particles and then heated to 148.9°C (300°F) before passing into a 2-roll calender. The top roll was set at about 107.2°C (225°F) and bottom roll to about 182.2°C (360°F). The product was consolidated into a composite sheet of about 3.2 mm (125 mils) to about 3.3 mm (130 mils) in thickness and then heated again to a temperature of about 176.7°C (350°F) to about 187.8(370°F). The composite sheet then was passed into a second calender with a top roll water cooled to about 10°C (50°F) and the bottom roll to about 4.4°C (40°F). The gauge of the composite sheet after the second calender was about 3.0 mm (120 mils) to about 3.2 mm (125 mils). The composite sheet was cooled through a water bath and then punched at about 40.6°C (105°F) into 12"x12" tile. The resultant tile had a two-layer construction with the top layer composed of the consolidated, surface applied resin particles. The top layer had a thickness of about 0.38 mm (15 mils) and was non-porous.

The composite tile structure can also be made by suspending the resin particles in a clear or pigmented plastisol or organisol, applying the particle containing plastisol or organisol to the backing layer, and curing the plastisol or organisol. Such a structure would be more expensive to make, but would yield improved non-directionality.

In another method, a clear or pigmented plastisol or organisol is overall printed onto a release carrier, such as a silicon belt to a thickness of about 25 microns (1 mil) to about 0.38 mm (15 mils). In a second embodiment the thickness is between about 0.15 mm (6 mils) and about 0.25 mm (10 mils). In either embodiment, the plastisol or organisol may be printed by screen printing. The viscosity of the plastisol is typically about 6 to about 10 thousand cp.

A plurality of the resin particles is applied to the wet surface. Excess particles that do not adhere to the plastisol or organisol are removed by vacuum and/or air impingement methods and the plastisol or organisol /particle composite is hard gelled/fused. The plastisol or organisol /particle composite is then transferred to the hot tile blanket via lamination by passing the belt carrier to which it is adhered through a laminator prior to the last laminator roll on a tile line.

Further, jaspe chips can be applied to the surface of the plastisol or organisol /particle composite and pressed into the composite in the last laminator on the line or they could be applied to the wet plastisol or organisol prior to the resin particle application.

The finished product, with or without the jaspe chips, has a visual very similar to that achieved by the calendering process described above, but additionally has superior wear performance due to the plastisol or organisol in the decorative layer.

While an embodiment of the present invention as illustrated and described above has been set forth, it is recognized that variations may be made with respect to the disclosed embodiments. Therefore, while the invention has been disclosed in various forms only, it will be obvious to those skilled in the art that many additions, deletions and modifications can be made without departing from the spirit and scope of this invention, and no undue limits should be imposed except as set forth in the following claims.

## Claims

1. A decorative tile comprising:
a resin backing layer and an adjacent non-porous decorative layer, said backing layer having a thickness greater than the thickness of said decorative layer, said decorative layer comprising at least three pluralities of differently colored resin particles, the size distribution of each plurality being such that less than 20% by weight of each plurality is retained on a No. 20 U.S. alternate mesh sieve, and wherein the differently colored resin particles are consolidated to form the non-porous decorative layer.

2. The decorative tile of claim 1, wherein the decorative tile is a vinyl composition tile.

3. The decorative tile of any of the preceding claims, wherein the resin particles are thermoplastic.

4. The decorative tile of any of the preceding claims, wherein the decorative layer comprises at least four pluralities of differently colored resin particles.

5. The decorative tile of any of the preceding claims, wherein the size distributions are such that at least 90% by weight of each plurality is retained on a No. 50 U.S. alternate mesh sieve.

6. The decorative tile of any of the preceding claims, wherein the size distributions are such that at least 98% by weight of each plurality is retained on a No. 80 U.S. alternate mesh sieve.

7. The decorative tile of any of the preceding claims, wherein the size distributions are such that at least 70% by weight of each plurality is retained on a No. 40 U.S. alternate mesh sieve.

8. The decorative tile of any of the preceding claims, wherein the non-porous decorative layer has a thickness of at least 0.25 mm (10 mils).

9. The decorative tile of any of the preceding claims, wherein the non-porous decorative layer further comprises chips, the decorative layer having a surface opposite the backing layer and the chips having a major surface, the surface of the decorative layer opposite the backing layer comprising a major surface of the chips, and the chips having a major dimension at least twice the thickness of the decorative layer.

10. The decorative tile of claim 9, wherein the chips have a major dimension at least four times the thickness of the decorative layer.

11. The decorative tile of claim 9 of 10, wherein the chips have a thickness at least one half the thickness of the decorative layer.

12. The decorative tile of claim 9, 10 or 11, wherein the chips comprise at least 5% of the surface area of the tile.

13. The decorative tile of any of claims 9 to 12, wherein the chips comprise no more than 50% of the surface area of the tile.

14. The decorative tile of any of claims 9 to 13, wherein the chips are selected from the group consisting of mono-colored chips, jaspe chips, and combinations thereof.

15. The decorative tile of any of claims 9 to 14, wherein the chips are of a color different than the color of the resin particles.

16. The decorative tile of any of the preceding claims, further comprising a discontinuous printed pattern overlying the decorative layer.

17. The decorative tile of claim 16, wherein the printed pattern comprises a pigmented plastisol.

18. The decorative tile of any of the preceding claims, wherein the decorative layer comprises, by weight, 20 to 80% of a first plurality of resin particles having a first color, 10 to 35% of a second plurality of resin particles having a second color, 5 to 35% of a third plurality of resin particles having a third color and 5 to 35% of a fourth plurality of resin particles having a fourth color.

19. The decorative tile of claim 18, wherein the decorative layer further comprises, by weight, 5 to 20% of a fifth plurality of resin particles having a fifth color.

20. The decorative tile of claim 18 or 19, wherein the resin particles of the first and second pluralities are of the same color family, but have different hues and different "L" values from one another.

21. The decorative tile of claim 20, wherein the resin particles of one of the third and fourth pluralities are of the same color family as the first and second pluralities, but have a different hue and an "L" value between the "L" value of the first and second pluralities.

22. The decorative tile of claim 19, wherein the resin particles of one of the third, fourth and fifth pluralities are of the same color family as the first and second pluralities, but have a different hue and an "L" value between the "L" value of the first and second pluralities.

23. The decorative tile of claim 23, wherein the resin particles of the other two of the third, fourth and fifth pluralities are of different color families from the first and second pluralities, one of the other two of the third, fourth and fifth pluralities has an "L" value greater than the "L" value of the first and second pluralities and the other one of the other two of the third, fourth and fifth pluralities has an "L" value less than the "L" value of the first and second pluralities.

24. The decorative tile of any of claims 18 to 24, wherein at least one of the pluralities of resin particles has an "L" value less than 30.

25. The decorative tile of any of the preceding claims, wherein the resin particles comprise at least 70% by weight of filler.

26. The decorative tile of any of the preceding claims, wherein the backing layer comprises at least 70% by weight of filler.

27. The decorative tile of any of the preceding claims, wherein the size distribution of each plurality being such that less than 5% by weight of each plurality is retained on a No. 20 U.S. alternate mesh sieve, at least 70% by weight of each plurality is retained on a No. 40 U.S. alternate mesh sieve, at least 95% by weight of each plurality is retained on a No. 80 U.S. alternate mesh sieve.

28. The decorative tile of any of the preceding claims, wherein the thickness of the consolidated decorative layer is greater than the major dimension of a majority, by weight, of the resin particles prior to consolidation.

29. The decorative tile of claim 29, wherein twice the thickness of the consolidated decorative layer is greater than the major dimension of 80%, by weight, of the unconsolidated resin particles.

30. The decorative tile of any of the preceding claims, wherein more than 10% by weight of the resin particles of the decorative layer pass through a No. 40 U.S. alternative mesh screen.

31. The decorative tile of claim 31, wherein more than 15% by weight of the resin particles of the decorative layer pass through a No. 40 U.S. alternative mesh screen.

32. The decorative tile of any of the preceding claims, wherein a majority of the resin particles are consolidated no more than one half their original size.

33. The decorative tile of any of the preceding claims, wherein the decorative layer is an exposed surface.

34. The decorative tile of any of the preceding claims, wherein one of the differently colored pluralities is transparent or translucent.

35. A decorative surface covering comprising a plurality of the decorative tiles of any of the preceding claims, wherein the tiles are adhered to a substrate, a first tile being adjacent a second tile whereby the seam between the first tile and the second tile is indiscernible to the unaided eye of an ordinary observer when viewed from a location approximately 1.5 m above the level of the tiles and within 1.5 m of the observer with a light source positioned at a 45° angle from the plane of the tiles and behind the observer.

36. A decorative surface covering comprising a plurality of the decorative tiles, wherein the tiles are adhered to a substrate, the tiles having a multicolored particulate design pattern, a first tile having a machine direction and a second tile having a machine direction, the first tile being adjacent the second tile with the machine direction of the first tile being perpendicular to the machine direction of the second tile whereby the seam between a first tile and the second tile is indiscernible to the unaided eye of an ordinary observer when viewed from a location approximately 1.5 m above the level of the tiles and within 1.5 m of the observer with a light source positioned at a 45° angle from the plane of the tiles and behind the observer.

37. A method of installing the decorative tiles, comprising
a) providing a first and a second decorative tile of any of the preceding claims,
b) providing a substrate, and
c) adhering the tiles to the substrate with the first tile adjacent the second tile, whereby the first tile and the second tile form a seam,
the seam between the first tile and the second tile being indiscernible to the unaided eye of an ordinary observer when viewed from a location approximately 1.5 m above level of the tiles and within 1.5 m of the observer with a light source positioned at a 45° angle from the plane of the tiles and behind the observer.

38. A method of installing the decorative tiles, comprising
a) providing a plurality of the decorative tiles having a multicolored particulate design pattern, the first tile having a machine direction and the second tile having a machine direction,
b) providing a substrate, and
c) adhering the tiles to the substrate with the machine direction of the first tile being perpendicular to the machine direction of the second tile and with a first tile adjacent a second tile, the first tile and the second tile forming a seam,
wherein the seam between the first tile and the second tile is indiscernible to the unaided eye of an ordinary observer when viewed from a location approximately 1.5 m above the level of the tiles with a light source positioned at a 45° angle from the plane of the tiles and behind the observer.

39. A method of making a decorative tile comprising
a) forming a backing layer,
b) forming at least three pluralities of resin particles, each plurality being different in color from the other pluralities, the size distribution of each plurality being such that less than 20% by weight of each plurality is retained on a No. 20 U.S. alternate mesh sieve,
c) mixing the pluralities of resin particles together,
d) applying the mixture of pluralities of resin particles to the surface of the backing layer to form a layer of resin particles on the backing layer,
e) consolidating the layer of resin particles to form a non-porous multicolored particulate patterned decorative layer adhered to the backing layer, and
f) cutting the consolidated layer into tiles.

40. The method of claim 40, wherein a majority of the resin particles are consolidated no more than one half their original size.

41. The method of claim 40 or 41, wherein the pluralities of resin particles are formed by mixing a resin composition comprising resin and filler in a continuous mixer, sheeting the mixture, grinding the sheeted mixture to form ground particles and sieving the ground particles to size the ground particles and form a plurality of resin particles.

42. The method of claim 40, 41 or 42, wherein the sheeted mixture is crushed to form breaker chips before the breaker chips are ground.
